# EUROPÄISCHE PATENTSCHRIFT

(11) **EP 1 325 295 B1**
(45) Veröffentlichungstag und Bekanntmachung des Hinweises auf die Patenterteilung: **03.10.2007**
(21) Anmeldenummer: 01967282.3
(22) Anmeldetag: 17.08.2001
(51) Int. Cl.: G01L 9/00

(54) **DRUCKMESSZELLE**
PRESSURE MEASURING CELL
CELLULE DE MESURE DE PRESSION

(30) Priorität: 10.10.2000 DE 10050300
(43) Veröffentlichungstag der Anmeldung: 09.07.2003
(73) Patentinhaber: Endress + Hauser GmbH + Co. KG, 79689 Maulburg (DE)
(72) Erfinder: BANHOLZER, Karlheinz, 79688 Hausen (DE); FLÖGEL, Karl, 79650 Schopfheim (DE); HEGNER, Frank, 79540 Lörrach (DE); ROSSKOPF, Bernd, 79688 Hausen i.W. (DE)
(74) Vertreter: Andres, Angelika Maria
(86) Internationale Anmeldenummer: PCT/EP2001/009492
(87) Internationale Veröffentlichungsnummer: WO 2002/031460

(56) Entgegenhaltungen:
- US-A- 4 542 435

## Beschreibung

Die Erfindung betrifft eine keramische Druckmeßzelle.

In der Druckmeßtechnik werden z.B. Absolutdruck-, Relativdruck- und Differenzdruckmeßzellen verwendet. Bei Absolutdruckmeßzellen wird ein zu messender Druck absolut, d.h. als Druckunterschied gegenüber einem Vakuum erfaßt. Mit einer Relativdruckmeßzelle wird ein zu messender Druck in Form eines Druckunterschiedes gegenüber einem Referenzdruck, z.B. einem Druck, der dort herrscht, wo sich der Sensor befindet, aufgenommen. Bei den meisten Anwendungen ist dies der Atmosphärendruck am Einsatzort. Es wird also bei Absolutdruckmeßzellen ein zu messender Druck bezogen auf einen festen Bezugsdruck, den Vakuumdruck, und bei Relativdruckmeßzellen ein zu messender Druck bezogen auf einen variablen Bezugsdruck, z.B. den Umgebungsdruck, erfaßt. Eine Differenzdruckmeßzelle erfaßt eine Differenz zwischen einem ersten und einem zweiten an der Meßzelle anliegenden Druck.

Es sind keramische Druckmeßzellen auf dem Markt, mit
- einem Grundkörper
- einer mit dem Grundkörper unter Bildung
   einer Meßkammer verbundenen Membran,
   -- die im Betrieb eine von einem zu messenden Druck abhängige Auslenkung erfährt, und
- einem elektromechanischen Wandler, der dazu dient die Auslenkung der Membran zu erfassen und einer weiteren Auswertung und/oder Verarbeitung zugänglich zu machen.

Es werden in der Druckmeßtechnik vorteilhaft keramische Druckmeßzellen eingesetzt, da keramische Druckmeßzellen eine Meßgenauigkeit aufweisen, die über sehr lange Zeit stabil ist. Ein Grund hierfür ist die feste ionische Bindung von Keramik, durch die der Werkstoff sehr dauerhaft ist und im Vergleich zu anderen Werkstoffen, z.B. Metallen, praktisch nicht altert.

Keramische Druckmeßzellen sind bislang üblicherweise als sogenannten trockene Absolut- oder Relativdruckmeßzellen ausgebildet. Eine trockene Druckmeßzelle ist nicht mit einer Flüssigkeit gefüllt, die einen Druck z.B. in eine Meßkammer der Druckmeßzelle überträgt. Die Druckmeßzelle ist an einem äußerem Rand unter Zwischenfügung einer Dichtung in ein Gehäuse eingespannt. Ein zu messender Druck ist der Membran durch eine Öffnung im Gehäuse oder einen mit dem in der Regel metallischen Gehäuse verbundenen Prozeßanschluß zugeführt. Solchen Meßzellen kann ein zu messender Druck nur direkt zugeführt werden. Die Verwendung z.B. eines vorgeschalteten Druckmittlers ist bei diesen Druckmeßzellen üblicherweise nicht vorgesehen.

Es ist möglich, den Druck über ein in den Grundkörper eingebrachtes z.B. eingeklebtes oder eingelötetes Druckröhrchen der Meßkammer zuzuführen. Durch ein eingelötetes Druckröhrchen ist eine elastomerfreie hermetisch dichte Abdichtung der Druckmeßzelle gegeben.
Es sind Druckröhrchen und Meßkammer, sowie eine dem Druckröhrchen vorgeschaltete Druckquelle, z.B. ein Druckmittler, mit einer Flüssigkeit gefüllt.

Bei solchen flüssigkeitsgefüllten Druckmeßzellen, ist es von Vorteil für deren Meßgenauigkeit, daß das Flüssigkeitsvolumen möglichst gering ist. Der Grund hierfür liegt im wesentlichen in einer thermischen Ausdehnung der Flüssigkeit über Temperatur, die zu einer Änderung eines Innendrucks in der Druckmeßzelle und damit zu deren Meßeigenschaften führt.

Bei der Kalibration der Druckmeßzellen ist es von Vorteil, wenn das benötigte Flüssigkeitsvolumen von Druckmeßzelle zu Druckmeßzelle möglichst identisch ist. Je mehr sich die zu kalibrierenden Druckmeßzellen gleichen, um so weniger Aufwand muß z.B. bei der Ermittlung der Meßzellenkenndaten betrieben werden.

Druckmeßzellen, die zur Messung einer Druckdifferenz dienen, weisen typischerweise zwei identisch ausgebildete Hälften auf, die jeweils an eine Druckquelle angebunden sind. Bei diesen Druckmeßzellen ist es nicht nur wichtig, daß jede Hälfte nur ein möglichst geringes Flüssigkeitsvolumen benötigt, sondern auch, daß das benötigte Flüssigkeitsvolumen in beiden Hälften möglichst identisch ist. Ein Grund hierfür ist, daß unterschiedliche Volumina bei einer Temperaturänderung eine unterschiedliche Volumenänderung in den beiden Hälften zur Folge haben. Dies kann zu erheblichen temperatur-abhängigen Meßfehlern führen.

Es ist eine Aufgabe der Erfindung, eine keramische Druckmeßzelle anzugeben, bei der ein Druck der Meßkammer mittels eines metallischen Druckröhrchens zugeführt ist, bei der ein Volumen im Inneren von der Meßzelle und dem Druckröhrchen möglichst reproduzierbar herstellbar ist.

Hierzu besteht die Erfindung in einer keramischen Druckmeßzelle mit
- einem Grundkörper
- einer mit dem Grundkörper unter Bildung einer Meßkammer verbundenen Membran,
   -- die im Betrieb eine von einem zu messenden Druck abhängige Auslenkung erfährt,
- einem elektromechanischen Wandler, der dazu dient die Auslenkung der Membran zu erfassen und einer weiteren Auswertung und/oder Verarbeitung zugänglich zu machen, und
- einer den Grundkörper durchdringenden Bohrung
   -- in die ein Druckröhrchen druckfest und gasdicht eingelötet ist,
      --- über das ein Druck in die Meßkammer eingeleitet ist, und
- einem mechanischen Anschlag, durch den eine Eindringtiefe des Druckröhrchens in den Grundkörper festgelegt ist.

Gemäß einer ersten Ausgestaltung ist der Anschlag eine an das Druckröhrchen angeformte sich radial nach außen erstreckende Schulter, die auf einer die Bohrung umgebenden Ringfläche des Grundkörpers aufliegt.

Gemäß einer zweiten Ausgestaltung weist die Bohrung einen meßkammer-zugewandten Abschnitt und einen meßkammer-abgewandten Abschnitt auf, der meßkammer-zugewandte Abschnitt weist einen Innendurchmesser auf, der geringer als ein Außendurchmesser des Druckröhrchens und ein Innendurchmesser des meßkammer-abgewandten Abschnitts ist und zwischen den beiden Abschnitten besteht eine Ringfläche, die den Anschlag bildet und auf der das Druckröhrchen mit einer ringförmigen Stirnfläche aufliegt.

Gemäß einer Ausgestaltung ist das Lot ein Glaslot.

Gemäß einer anderen Ausgestaltung ist das Lot ein metallisches Hartlot und der keramische Grundkörper weist an einer Verbindungstelle zwischen Grundkörper und Druckröhrchen eine Vormetallisierung auf.

Gemäß einer weiteren Ausgestaltung ist das Lot ein Aktivhartlot.

Durch den Anschlag wird erreicht, daß eine Eindringtiefe des Druckröhrchens in den Grundkörper genau vorgegeben ist. Entsprechend ist ein Volumen, das das Druckröhrchen in der Bohrung im Grundkörper verdrängt reproduzierbar herstellbar. Zusammen mit einem aus dessen Abmessungen bekannten Innenvolumen der Meßkammer ist damit das Innenvolumen der Druckmeßzelle reproduzierbar herstellbar.

Die Erfindung und weitere Vorteile werden nun anhand der Figur der Zeichnung, in der ein Ausführungsbeispiel dargestellt ist, näher erläutert.

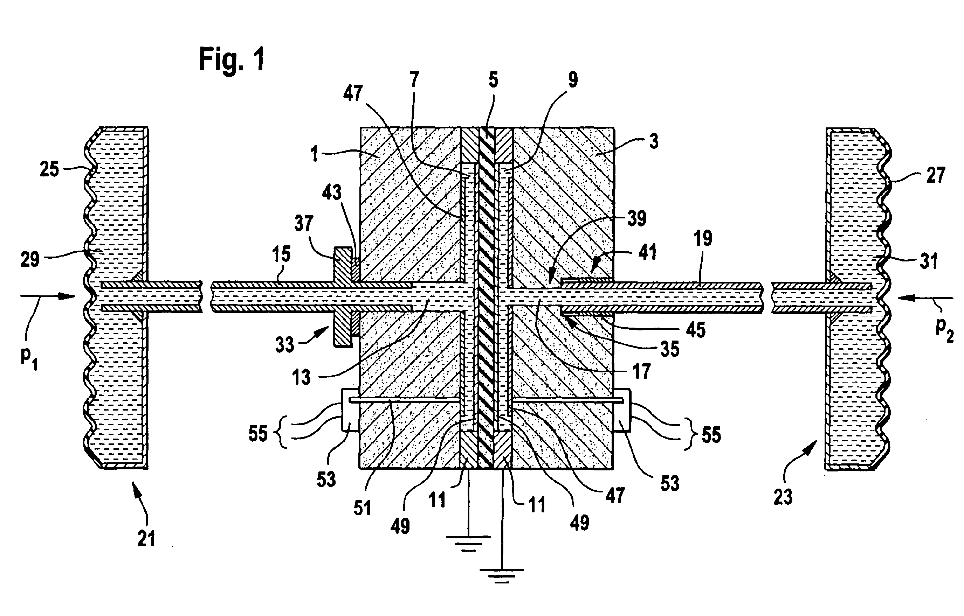

Fig. 1 zeigt einen Schnitt durch eine erfindungsgemäße Druckmeßzelle.

Fig. 1 zeigt einen Schnitt durch eine erfindungsgemäße keramische Druckmeßzelle. Sie ist als Differenzdruck-meßzelle ausgeführt und weist einen ersten Grundkörper 1 und einen zweiten Grundkörper 3 auf. Zwischen dem ersten Grundkörper 1 und dem zweiten Grundkörper 3 ist eine Membran 5 angeordnet. Die Membran 5 ist mit dem ersten Grundkörper 1 unter Bildung einer ersten Meßkammer 7 und mit dem zweiten Grundkörper 3 unter Bildung einer zweiten Meßkammer 9 verbunden.

Die Membran 5 und der erste und der zweiter Grundkörper 1, 3 bestehen aus Keramik. Der erste und der zweite Grundkörper 1, 3 sind mit der Membran 5 jeweils durch eine Fügung 11, z.B. mittels eines Aktivhartlots, wie z.B. einem Zirkon-Eisen-Titan-Beryllium-Lot, an einem jeweils äußeren ringförmigen Rand verbunden.

Im Betrieb herrscht in der ersten Meßkammer 7 ein erster Druck p₁ und in der zweiten Meßkammer 9 ein zweiter Druck p₂. Die Auslenkung der Membran 5 hängt von einem zu messenden Druck ab, der der Differenz des ersten und des zweiten Drucks p₁, p₂ entspricht.

Zur Druckzufuhr weist der erste Grundkörper 1 eine durchgehende in die Meßkammer 7 führende Bohrung 13 auf, in die ein erstes Druckröhrchen 15 eingeführt ist. Über das erste Druckröhrchen 15 ist im Betrieb der erste Druck p₁ der Meßkammer 7 zugeführt. Analog weist der zweite Grundkörper 3 zur Druckzufuhr eine durchgehende in die Meßkammer 9 führende Bohrung 17 auf, in die ein zweites Druckröhrchen 19 eingeführt ist. Über das Druckröhrchen 19 ist im Betrieb der zweite Druck p₂ der Meßkammer 9 zugeführt.

Die Druckröhrchen 15, 19 sind in dem gezeigten Ausführungsbeispiel jeweils mit einem Druckmittler 21, 23 verbunden. Die Druckmittler 21, 23 weisen jeweils eine Trennmembran 25, 27 auf, die jeweils eine Kammer 29, 31 abdeckt. Von außen wirkt auf die Trennmembran 25 der erste Druck p₁ und auf die zweite Trennmembran 27 der zweite Druck p₂ ein. Die Kammern 29, 31, die Druckröhrchen 15, 19 und die Meßkammern 7, 9 sind mit einer möglichst inkompressiblen Flüssigkeit, z.B. einem Silikonöl gefüllt. Durch die Flüssigkeit werden die von außen auf die Trennmembranen 25, 27 einwirkenden ersten und zweiten Drücke p₁, p₂ in die zugeordnete erste bzw. zweite Meßkammer 7, 9 übertragen, wo sie auf jeweils auf eine Seite der Membran 5 einwirken.

Es ist ein mechanischer Anschlag 33 vorgesehen, durch den eine Eindringtiefe des ersten Druckröhrchens 15 in den Grundkörper 1 festgelegt ist. Weiter ist ein mechanischer Anschlag 35 vorgesehen, durch den eine Eindringtiefe des zweiten Druckröhrchens 19 in den zweiten Grundkörper 3 festgelegt ist.

Die Eindringtiefe eines Druckröhrchens läßt sich mittels eines Anschlags auf verschiedene Weise festlegen. In Fig. 1 sind daher exemplarisch zwei Ausführungen eines mechanischen Anschlags dargestellt. Andere Formen eines mechanischen Anschlags, die ein weiteres Eindringen des Druckröhrchens durch eine mechanische Sperre unterbinden sind ebenfalls einsetzbar.

Bei der ersten Ausführung besteht der Anschlag 33 in einer an das Druckröhrchen 15 angeformten sich radial nach außen erstreckenden Schulter 37, die auf einer die Bohrung 13 umgebenden membran-abgewandten Ringfläche des Grundkörpers 1 aufliegt.

Bei der zweiten dargestellen Ausführung weist die Bohrung 17 einen meßkammer-zugewandten Abschnitt 39 und einen meßkammer-abgewandten Abschnitt 41 auf. Der meßkammer-zugewandte Abschnitt 39 weist einen Innendurchmesser auf, der geringer als ein Außendurchmesser des Druckröhrchens 19 und ein Innendurchmesser des meßkammer-abgewandten Abschnitts 41 ist. Zwischen den beiden Abschnitten 39, 41 besteht ein Ringfläche, die den Anschlag 35 bildet. Das Druckröhrchen 19 liegt auf der Ringfläche mit einer ringförmigen Stirnfläche auf.

Die Druckröhrchen 15, 19 bestehen aus Metall, z.B. aus einem Edelstahl, Tantal oder einer Nickel-Eisen-Kobalt-Legierung, wie sie z.B. unter den Produktnamen Kovar im Handel erhältlich ist, und sind in die jeweilige Bohrung 13, 17 druckfest und gasdicht mittels eines Lots 43, 45 eingelötet.

Beim der ersten Ausführung ist das Lot 43 zwischen der Schulter 37 und dem ersten Grundkörper 1 ringförmig aufgebracht. Bei der zweiten Ausführung ist das Lot 45 in einem ringzylindrischen Spalt zwischen dem Druckröhrchen 19 und der Bohrung 17 eingebracht. Alternativ könnte das Lot bei der ersten Ausführung auch in einem ringzylindrischen Spalt zwischen dem Druckröhrchen 15 und der Bohrung 13 eingebracht sein.

Als Lot 43, 45 eignen sich bevorzugt ein Glaslot, ein metallisches Hartlot oder ein Aktivhartlot, z.B. ein Silber-Kupfer-Aktivhartlot.

Bei Verwendung eines metallischen Hartlots ist der keramische Grundkörper an einer Verbindungstelle zwischen Grundkörper und Druckröhrchen mit einer Vormetallisierung, z.B. aus Molybdän-Mangan mit einem Nickelüberzug, versehen. Als Lot eignet sich z.B. ein auf die Vormetallisierung aufgebrachtes Silber-Kupfer-Hartiot.

Der Lötvorgang erfolgt z.B. in einem Ofen unter Vakuum oder in einer Schutzgasatmosphäre.

Die Anschläge 33, 35 bieten beim Löten den Vorteil, daß die erforderliche Lotmenge sehr genau dosiert und positioniert werden kann, da die Lage des jeweiligen Druckröhrchens 15, 19 in der jeweiligen Bohrung 13, 17 genau festgelegt ist. Hierdurch ist eine sehr hochwertige und damit uneingeschränkt gasdichte und mechanisch stabile, insb. sehr druckfeste Verbindung ermöglicht.

Die Druckmeßzellen können daher sehr hohen Drücken, z.B. 40000 kPa (400 bar), standhalten.

Im Betrieb erfährt die Membran 5 eine Auslenkung, die von dem zu messenden Druck, hier der Differenz des ersten und des zweiten Drucks p₁, p₂ abhängt. Die Auslenkung wird mittels eines elektromechanischen Wandlers erfaßt.

In dem gezeigten Ausführungsbeispiel weist der elektromechnanische Wandler eine auf einer membran-zugewandten Innenfläche des ersten Grundkörpers 1 aufgebrachte Elektrode 47 auf, die zusammen mit einer auf der Membran 5 aufgebrachten Gegenelektrode 49 einen Kondensator bildet, dessen Kapazität ein Maß für die Auslenkung der Membran 5 ist.

Die Gegenelektrode 49 grenzt an deren äußerem Rand elektrisch leitend an die Fügung 11 an und ist vorzugsweise über die Fügung 11 an Masse oder an ein festes Referenzpotential angeschlossen.

Da es sich bei dem dargestellten Ausführungsbeispiel um eine Differenzdruckmeßzelle handelt ist in der zweiten Meßkammer 9 vorzugsweise, wie in Fig. 1 dargestellt, ein identisch aufgebauter elektromechanischer Wandler vorgesehen.

Bei solchen kapazitiven Wandlern bietet der Anschlag 33 den weiteren Vorteil, daß ausgeschlossen ist, daß das Druckröhrchen 15 in die Meßkammer 7 eindringt und dort einen Kurzschluß zwischen Elektrode 47 und Gegenelektrode 49 erzeugt. Ein solcher Kurzschluß würde zu einem Totalausfall der Meßzelle führen.

Der Grundkörper 1 weist eine durchgehende Bohrung auf, durch den ein metallischer Kontaktstift 51 hindurch geführt ist. Über den Kontaktstift 51 ist die Elektrode 47 zur Messung der Kapazität elektrisch angeschlossen. Hierzu ist ein erstes Ende des Kontaktstifts 51 elektrisch leitend mit der Elektrode 47 verbunden. Ein verbleibendes zweites Ende ragt aus dem Grundkörper 1 heraus und ist in dem gezeigten Ausführungsbeispiel einer auf dem Grundkörper 1 angeordneten elektronischen Schaltung 53 zugeführt. Die elektronische Schaltung 53 formt die Kapazitätsänderungen des Kondensators in ein elektrisches Ausgangssignal, z.B. in eine sich entsprechend ändernde elektrische Spannung, um. Das Ausgangssignal steht über Anschlußleitungen 55 einer weiteren Verarbeitung und/oder Auswertung zur Verfügung.

Der zweite Grundkörper 3 weist ebenfalls eine solche Durchkontaktierung auf, über die der in der zweiten Meßkammer 9 angeordnete elektromechanische Wandler mit einer elektronische Schaltung 53 verbunden ist. Es wird vorzugsweise die Differenz der Kapazitäten der beiden elektromechanischen Wandler bestimmt und daraus der Differenzdruck ermittelt.
In Fig. 1 ist eine Differenzdruckmeßzelle dargestellt. Auf analoge Weise können auch Relativdruck- oder Absolutdruckmeßzelle aufgebaut sein. Bei einer Relativdruckmeßzelle entspräche z.B. der erste Druck p₁ einem zu messenden Druck und der zweite Druck p₂ einem Referenzdruck, auf den der zu messende Druck bezogen wird. Es kann natürlich auch bei der zweiten Meßkammer 9 anstelle des daran angeschlossenen Druckmittlers 23 eine Referenzdruckzufuhr vorgesehen sein, z.B. eine den Grundkörper 3 durchdringende Bohrung durch die ein in der Umgebung herschender Druck in die zweite Meßkammer 9 einwirkt.

Analog erhält man eine Absolutdruckmeßzelle, indem man die die zweite Meßkammer 9 evakuiert und hermetisch dicht verschließt, anstatt sie an einen Druckmittler 23 anzuschließen.

## Patentansprüche

1. Keramische Druckmeßzelle mit
- einem Grundkörper (1, 3)
- einer mit dem Grundkörper (1, 3) unter Bildung einer Meßkammer (7, 9) verbundenen Membran (5),
-- die im Betrieb eine von einem zu messenden Druck (p₁-p₂) abhängige Auslenkung erfährt,
- einem elektromechanischen Wandler, der dazu dient die Auslenkung der Membran (5) zu erfassen und einer weiteren Auswertung und/oder Verarbeitung zugänglich zu machen,
- einer den Grundkörper (1, 3) durchdringenden Bohrung (13, 17)
-- in die ein Druckröhrchen (15, 19) druckfest und gasdicht eingelötet ist,
--- über das ein Druck (p₁, p₂) in die Meßkammer (7, 9) eingeleitet ist, und
-- einem mechanischen Anschlag (33, 35), durch den eine Eindringtiefe des Druckröhrchens (15, 19) in den Grundkörper (1, 3) festgelegt ist.

2. Druckmeßzelle nach Anspruch 1, bei der der Anschlag (33) eine an das Druckröhrchen (15) angeformte sich radial nach außen erstreckende Schulter (37) ist, die auf einer die Bohrung (13) umgebenden Ringfläche des Grundkörpers (1) aufliegt.

3. Druckmeßzelle nach Anspruch 1, bei der
- die Bohrung (17) einen meßkammer-zugewandten Abschnitt (39) und einen meßkammer-abgewandten Abschnitt (41) aufweist,
- der meßkammer-zugewandte Abschnitt (39) einen Innendurchmesser aufweist, der geringer als ein Außendurchmesser des Druckröhrchens (19) und ein Innendurchmesser des meßkammer-abgewandten Abschnitts (41) ist, und bei der
- zwischen den beiden Abschnitten (39, 41) eine Ringfläche besteht,
-- die den Anschlag (35) bildet und
-- auf der das Druckröhrchen (19) mit einer ringförmigen Stirnfläche aufliegt.

4. Druckmeßzelle nach Anspruch 1, bei der das Lot ein Glaslot ist.

5. Druckmeßzelle nach Anspruch 1, bei der das Lot ein metallisches Hartlot ist und der keramische Grundkörper (1, 3) an einer Verbindungstelle zwischen Grundkörper (1, 3) und Druckröhrchen (15, 19) eine Vormetallisierung aufweist.

6. Druckmeßzelle nach Anspruch 1, bei der das Lot ein Aktivhartlot ist.

## Claims

1. A ceramic pressure measuring cell:
- having a base body (1, 3),
- having a membrane (5) connected to the base body (1, 3) to form a measuring chamber (7, 9),
- which membrane, in operation, undergoes a deflection that is dependent on a pressure to be measured (p₁-p₂),
- having an electromechanical transducer which is used to detect the deflection of the membrane (5) and to make it accessible to further analysis and/or processing,
- having a hole (13, 17) penetrating the base body (1, 3),
- into which hole there is soldered, in a pressure-resistant and gas-tight manner, a small pressure tube (15, 19)
- by means of which a pressure (p₁, p₂) is introduced into the measuring chamber (7, 9), and
- having a mechanical stop (33, 35) which defines a depth to which the small pressure tube (15, 19) penetrates the base body (1, 3).

2. A pressure measuring cell according to claim 1, in which the stop (33) is a shoulder (37) which is moulded onto the small pressure tube (15), extends radially outwards and rests on an annular face of the base body (1) surrounding the hole (13).

3. A pressure measuring cell according to claim 1, in which
- the hole (17) has a section (39) nearer to the measuring chamber and a section (41) further from the measuring chamber,
- the section (39) nearer to the measuring chamber has an inside diameter which is smaller than an outside diameter of the small pressure tube (19) and an inside diameter of the section (41) further from the measuring chamber, and in which cell
- there is between the two sections (39, 41) an annular face,
- which forms the stop (35), and
- on which the small pressure tube (19) rests with an annular end face.

4. A pressure measuring cell according to claim 1, in which the solder is a glass solder.

5. A pressure measuring cell according to claim 1, in which the solder is a metal brazing solder and the ceramic base body (1, 3) has a premetallisation at a joint between the base body (1, 3) and the small pressure tube (15, 19).

6. A pressure measuring cell according to claim 1, in which the solder is an active brazing solder.

## Revendications

1. Cellule de mesure de pression céramique avec
- un corps de base (1, 3)
- une membrane (5) reliée avec le corps de base (1, 3), formant une chambre de mesure (7, 9),
-- laquelle membrane (5) subit en fonctionnement une déviation fonction de la pression à mesurer (p₁-p₂),
- un convertisseur électromécanique, qui sert à saisir la déviation de la membrane (5) et à la rendre accessible à une unité d'exploitation et/ou de traitement aval,
- un alésage (13, 17) traversant le corps de base (1, 3)
-- dans lequel est soudé un tube de pression (15, 19), de telle manière à résister aux pressions et à être étanche aux gaz,
--- par l'intermédiaire de laquelle une pression (p1, p2) est acheminée dans la chambre de mesure (7, 9), et
- une butée mécanique (33, 35), à travers laquelle est définie une profondeur de pénétration du tube de pression (15, 19) dans le corps de base (1, 3).

2. Cellule de mesure de pression selon la revendication 1, pour laquelle la butée (33) est un épaulement (37) s'étendant radialement vers l'extérieur, formé sur le tube de pression (15), lequel épaulement repose sur une surface annulaire du corps de base (1), laquelle surface entoure l'alésage (13).

3. Cellule de mesure de pression selon la revendication 1, pour laquelle
- l'alésage (17) présente une section (39) située du côté de la chambre de mesure et une section (41) située du côté opposé à la chambre de mesure,
- la section (39) située du côté de la chambre de mesure présente un diamètre intérieur inférieur à un diamètre extérieur du tube de pression (19) et un diamètre intérieur de la section (41), et pour laquelle
- il existe entre les deux sections (39, 41) une surface annulaire,
-- qui forme la butée (35) et
-- sur laquelle repose le tube de pression (19) avec une surface frontale annulaire.

4. Cellule de mesure de pression selon la revendication 1, pour laquelle la soudure est un verre à souder.

5. Cellule de mesure de pression selon la revendication 1, pour laquelle la soudure est une soudure forte métallique et le corps de base (1, 3) présente une prémétallisation au niveau d'une jonction entre le corps de base (1, 3) et le tube de pression (15, 19).

6. Cellule de mesure de pression selon la revendication 1, pour laquelle la soudure est une soudure forte active.
